# EUROPÄISCHE PATENTSCHRIFT

(11) **EP 3 620 342 B1**
(45) Veröffentlichungstag und Bekanntmachung des Hinweises auf die Patenterteilung: **17.03.2021**
(21) Anmeldenummer: 19193657.4
(22) Anmeldetag: 27.08.2019
(51) Int. Cl.: B61D 33/00, B61D 35/00, B61D 37/00, B61D 17/18, B60N 2/30, B60N 2/02

(54) **KLAPPSITZANORDNUNG MIT INTEGRIERTER KOFFERABLAGE FÜR EIN SCHIENENFAHRZEUG**
FOLDING SEAT ARRANGEMENT WITH INTEGRATED LUGGAGE STORAGE FOR A RAIL VEHICLE
AGENCEMENT DE SIÈGE PLIANT POURVU DE RANGEMENT À BAGAGE INTÉGRÉ POUR UN VÉHICULE FERROVIAIRE

(30) Priorität: 10.09.2018 DE 102018215315
(43) Veröffentlichungstag der Anmeldung: 11.03.2020
(73) Patentinhaber: Siemens Mobility GmbH, 81739 München (DE)
(72) Erfinder: Schiefer, Benno, 40233 Düsseldorf (DE)

(56) Entgegenhaltungen:
- EP-A1- 2 650 188
- EP-A1- 2 815 974
- US-A1- 2004 227 034

## Beschreibung

Die Erfindung betrifft eine Klappsitzanordnung mit einer zwischen einer eingeklappten Stellung und einer ausgeklappten Stellung klappbaren Sitzfläche.

Klappsitzanordnungen mit klappbaren Sitzflächen sind grundsätzlich bekannt. In Schienenfahrzeugen können Klappsitzanordnungen für Kinder in Sanitärzellen bereitgestellt werden. Gleichermaßen sind Kofferablagen in Sanitärzellen von Schienenfahrzeugen geläufig.

Der Erfindung liegt die Aufgabe zugrunde, eine hinsichtlich Bauraum und Kosten verbesserte Sanitärzelle vorzuschlagen.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Eine erfindungsgemäße Klappsitzanordnung umfasst eine zwischen einer eingeklappten Stellung und einer ausgeklappten Stellung klappbaren Sitzfläche sowie klappbare Ablageflügel, die in einer eingeklappten Stellung der klappbaren Sitzfläche und in einer eingeklappten Stellung der klappbaren Ablageflügel seitlich neben der klappbaren Sitzfläche angeordnet sind, so dass die klappbare Sitzfläche in eingeklappter Stellung seitlich von den klappbaren Ablageflügeln in eingeklappter Stellung eingefasst ist, wobei jeweilige Oberseiten der Ablageflügel in ausgeklappter Stellung eine gemeinsame Ebene zur Ablage eines Koffers mit einer Oberseite der Sitzfläche in ausgeklappter Stellung aufspannen.

Dabei können jeweilige Unterseiten der Ablageflügel in eingeklappter Stellung bündig mit einer Unterseite der Sitzfläche in eingeklappter Stellung verlaufen.

Die Unterseiten von Sitzfläche und Ablageflügeln können vergleichsweise glatt sein. Die Oberseite der Sitzfläche kann eine Polsterung umfassen. Die Oberseite der Ablageflügel kann ebenfalls gepolstert sein, dann insbesondere in gleicher Art und Weise, oder die Oberseite der Ablageflügel kann eine sägezahnförmige oder wellenförmige Oberfläche aufweisen. Dann liegen lediglich die Spitzen der Sägezähne oder der Wellen mit der Oberseite der Sitzfläche in einer gemeinsamen Ebene. Sind die Werkstoffe der Oberseiten der Sitzfläche und/oder der Ablageflügel so beschaffen, dass sie sich unter einer vorgegebenen Flächenlast signifikant elastisch verformen, beispielsweise durch Ablage eines Koffers vorgegebenen Gewichts und Größe, sind die Werkstoffe der Oberseiten der Sitzfläche und/oder der Ablageflügel so ausgewählt, dass sie sich bei einer vorgegebenen Flächenlast derart verformen, dass deren Oberflächen im verformten Zustand eine gemeinsame Ebene aufspannen.

Als klappbare Sitzfläche wird der ausklappbare und meist mit einer gepolsterten Auflage versehene Teil des Sitzes bezeichnet, der das Gewicht einer auf der Klappsitzanordnung sitzenden Person aufnimmt. Der Begriff hat sich umgangssprachlich durchgesetzt und soll hier in seiner umgangssprachlichen Bedeutung verstanden werden, obwohl nicht eine Fläche an sich, sondern ein Bauteil mitsamt der Fläche gemeint ist. Daher werden auch unter den Ausdrücken Ober- und Unterseite der Sitzfläche die entsprechenden sichtbaren und haptisch ertastbaren äußeren Konturen des genannten Bauteils verstanden.

Die Sitzfläche sowie die Ablageflügel liegen insbesondere in der jeweils eingeklappten Stellung im Wesentlichen in einer vertikalen Ebene und erstrecken sich jeweils in der ausgeklappten Stellung im Wesentlichen horizontal.

Eine weitere Weiterbildung der erfindungsgemäßen Klappsitzanordnung sieht vor, dass die Klappsitzanordnung eine Rückenlehne aufweist, die feststehend ist. Die feststehende Rückenlehne ist insbesondere von einer Wand bzw. von einem Wandpaneel oder von einem simsartigen Wandvorbau umfasst oder sie ist an eine Wand montierbar ausgebildet.

Gemäß einer weiteren Weiterbildung der Erfindung weist die Klappsitzanordnung ein ausklappbares Kopfteil auf, wobei eine Vorderseite des Kopfteils in einer eingeklappten Stellung einer Vorderseite der Rückenlehne zugewandt ist und somit zu ihr weist und in einer ausgeklappten Stellung die Rückenlehne, insbesondere flächenbündig, verlängert. Das ausgeklappte Kopfteil kann sich beispielsweise direkt mit einer Rückseite am Wandpaneel abstützen oder eine Unterseite kann am simsartigen Wandvorbau abgestützt sein.

Weitergebildet verläuft eine Rückseite des Kopfteils in eingeklappter Stellung bündig mit der Unterseite der Sitzfläche in der eingeklappten Stellung.

Die Klappsitzanordnung ist gemäß einer Ausführungsform fix an einer Wand befestigbar oder sie weist ein Wandpaneel oder einen simsartigen Wandvorbau auf, an welchem sie fest befestigt ist.

Ein erfindungsgemäßes Wandpaneel oder ein erfindungsgemäßer simsartiger Wandvorbau umfasst somit wenigstens eine erfindungsgemäße Klappsitzanordnung. Die Klappsitzanordnung kann dabei so in das Wandpaneel oder in den simsartigen Wandvorbau integriert sein, dass alle klappbaren Komponenten, insbesondere die Unterseite der Sitzfläche, die Unterseiten der Ablageflächen, die Rückseite des Kopfteils, in jeweils eingeklappter Stellung bündig mit einer die Klappsitzanordnung umgebenden Front des Wandpaneels oder des Wandvorbaus sind.

Als Wandpaneel wird üblicherweise eine großflächige Wandverkleidung bezeichnet, in welche die Klappsitzanordnung eingebettet und in eingeklappter Stellung vollständig versenkt sein kann. Das Wandpaneel könnte somit auch Wandverkleidungselement genannt werden. Auch der simsartige Wandvorbau kennzeichnet ein entsprechend ausgeformtes Wandverkleidungselement.

Ein erfindungsgemäßes Fahrzeug des öffentlichen Personenverkehrs, insbesondere ein Schienenfahrzeug, umfasst wenigstens eine erfindungsgemäße Klappsitzanordnung bzw. wenigstens ein erfindungsgemäßes Wandpaneel oder wenigstens einen erfindungsgemäßen simsartigen Wandvorbau mit Klappsitzanordnung.

Die Klappsitzanordnung bzw. das Wandpaneel oder der Wandvorbau können weitergebildet in einer Sanitärzelle des Fahrzeugs angeordnet sein. Die Sanitärzelle umfasst weitergebildet wenigstens einen Spülkasten für eine Toilette, welcher seinerseits vom Wandpaneel oder vom Wandvorbau verdeckt ist oder welcher in das Wandpaneel oder den simsartigen Wandvorbau integriert ist. Die Oberfläche des Spülkastens verläuft somit ebenfalls bündig mit den genannten Komponenten der Klappsitzanordnung.

Die Klappsitzanordnung, insbesondere deren Sitzfläche, ist grundsätzlich geeignet ausgebildet, in der ausgeklappten Stellung eine Person sitzend aufzunehmen. Gemäß einer vorteilhaften Ausführungsform ist die Klappsitzanordnung für Kinder bestimmt und geeignet. Es könnte somit von einem Kinderklappsitz bzw. einer Kinderklappsitzanordnung gesprochen werden. Die Klappsitzanordnung, insbesondere deren Sitzfläche, deren Rücklehne und deren Kopfteil, ist daher ausgebildet, Kinder sitzend aufzunehmen. Die Ablageflügel wirken hierbei in eingeklappter Stellung hierbei als Seitenwangen oder Seitenführungen. Die Auflageflächen sowie die Sitzfläche sind ihrerseits geeignet ausgebildet und dimensioniert zur Ablage eines Koffers oder ähnlicher Gepäckstücke.

Die Klappsitzanordnung nimmt nur wenig Bauraum in Anspruch, da bisher separate Vorrichtungen für Kofferablage und Kindersitz in dieser Ausführung in einer Komponente kombiniert wurden. Darüber hinaus kann ein optisch ansprechendes Design erzielt werden, insbesondere bei vollständig versenkten Komponenten.

Nach einer weiteren Weiterbildung ist vorgesehen, dass die klappbaren Ablageflügel miteinander fest verbunden oder gekoppelt sind, so dass sie gemeinsam umklappbar sind. Insbesondere sind die klappbaren Ablageflügel damit nicht mehr getrennt voneinander umklappbar, sondern nur noch zusammen in einem Zug.

Beispielsweise können die Ablageflügel jeweils im Bereich eines Endes über einen Steg verbunden sein, welcher Steg eine Unterseite aufweist, die bündig mit den Unterseiten der Ablageflügel verläuft und somit die Unterseiten der Klappflügel und des Stegs in einer gemeinsamen Ebene liegen.

Die klappbaren Ablageflügel können dem Steg gegenüberliegende freie Enden aufweisen, so dass eine U-förmige Form entsteht. Die Achse, um welche die Ablageflügel dann klappbar sind, könnte dann ausgestaltungsgemäß nahe der Basis der U-förmigen Form angeordnet sein.

Gemäß einer weiteren Weiterbildung sind die klappbaren Ablageflügel und die klappbare Sitzfläche um dieselbe Achse klappbar angeordnet. Die Klappsitzanordnung ist derart ausgebildet, dass die klappbaren Ablageflügel und die klappbare Sitzfläche dieselbe Achse nutzen, um welche sie klappbar angeordnet sind.

Weitergebildet ist die klappbare Sitzfläche zur Achse, um welche die klappbare Sitzfläche aus der eingeklappten Stellung in die ausgeklappte Stellung und umgekehrt klappbar ist, derart angeordnet, dass ein hinterer Teil der Sitzfläche in ausgeklappter Stellung zwischen den Ablageflügeln in eingeklappter Stellung angeordnet ist. Dadurch ist ein vorderer Teil der Sitzfläche frei zugänglich. Der hintere Teil der Sitzfläche ist hingegen im Wandpaneel und zwischen den Ablageflügeln versenkt. Die seitlichen Ablageflügel bilden in der ausgeklappten Stellung der Sitzfläche und der eingeklappten Stellung der Auflageflügel Seitenführungen und bieten daher einer auf der Sitzfläche sitzenden Person Seitenhalt. Die Sitzfläche ist vorteilhaft vollständig nutzbar.

Analoges kann für die Ablageflügel in Bezug auf das umgebende Wandpaneel gelten. So können die Ablageflügel zur Achse, um welche sie aus der eingeklappten Stellung in die ausgeklappte Stellung und umgekehrt klappbar sind, derart angeordnet sein, dass jeweils ein hinterer Teil der Ablageflügel in ausgeklappter Stellung zwischen dem Wandpaneel angeordnet sind. Ein vorderer Teil der Ablageflügel, beispielsweise die freien Enden der Ablageflügel, sind hingegen frei zugänglich. Ein dem freien Enden gegenüberliegender Steg, welcher die Ablageflügel im jeweiligen hinteren Teil miteinander verbindet, kann gleichermaßen in ausgeklappter Stellung in dem umgebenden Wandpaneel versenkt sein.

Die Achse, um welche die Sitzfläche und/oder die Ablageflügel klappbar sind, kann unterhalb der Unterseite der Sitzfläche und/oder der Ablageflügel angeordnet sein. Insbesondere jedoch nicht an einem jeweiligen Ende, sondern im Bereich eines jeweiligen Endes, so dass der im umgebenden Wandpaneel bzw. zwischen den Ablageflügel versenkte jeweilige hintere Teil klein ist im Vergleich zum jeweils vorderen, frei zugänglichen Teil.

Die vorderen Teile der Ablageflügel sowie der vordere Teil der Sitzfläche klappen dann beim Ausklappen von der eingeklappten in die ausgeklappte Stellung jeweils nach vorne unten, während die jeweils hinteren Teile nach hinten oben geschwenkt werden.

Sitzfläche und Ablageflügel weisen weitergebildet dieselbe Länge auf. Bei ausgeklappter Sitzfläche bzw. ausgeklappten Ablageflügeln würde hier von gleicher Tiefe gesprochen werden. Die jeweilige Breite bemisst sich dann insbesondere parallel zur jeweiligen Achse, um welche die Sitzfläche bzw. Ablageflügel klappbar sind.

So kann beispielsweise die Achse, um welche die Ablageflügel klappbar sind, so zu den Ablageflügeln angeordnet und mit diesen verbunden sein, dass der Steg, über welchen die Ablageflügel miteinander verbunden sind, in ausgeklappter Stellung vollständig im Wandpaneel versenkt ist.

Die Sitzfläche und der Steg können sich in jeweils eingeklappter Stellung überlappen, insbesondere bei gleicher Achse, um welche sie klappbar sind. Gemäß einer Ausführungsform der Erfindung ist die Klappsitzanordnung derart ausgebildet ist, dass in eingeklappter Stellung sowohl der klappbaren Sitzfläche als auch der klappbaren Ablageflügel ein hinterer Bereich der klappbaren Sitzfläche mit Blick auf die Unterseiten der Sitzfläche, der Ablageflügel und des Stegs in horizontaler Richtung hinter dem Steg angeordnet ist. In ausgeklappter Stellung sowohl der klappbaren Sitzfläche als auch der klappbaren Ablageflügel kann der Steg dann unter dem hinteren Bereich der klappbaren Sitzfläche angeordnet sein.

Darüber hinaus kann die klappbare Sitzfläche vorteilhaft auf ihrer Unterseite in einem hinteren Bereich, welcher ungleich dem hinteren Teil sein kann, eine Vertiefung oder Einsenkung aufweisen, die einer Dicke des Stegs entspricht, wobei die Vertiefung in eingeklappter Stellung sowohl der klappbaren Sitzfläche als auch der klappbaren Ablageflügel, in einem Bereich der Sitzfläche angeordnet ist, welche mit Blick auf die Unterseite der Sitzfläche in horizontaler Richtung hinter dem Steg liegt, so dass die Vertiefung oder Einsenkung in eingeklappter Stellung der klappbaren Sitzfläche als auch der klappbaren Ablageflügel den Steg aufnimmt und die Unterseiten des Stegs und der Sitzfläche bündig verlaufen. Zusätzlich oder alternativ kann aus demselben Grund auch der Steg auf einer Oberseite in einem hinteren Bereich eine Vertiefung aufweisen, die zur Vertiefung in der Sitzfläche komplementär ausgebildet ist.

Weitergebildet ist die klappbare Sitzfläche unabhängig von den klappbaren Ablageflügeln von der eingeklappten Stellung in die ausgeklappte Stellung klappbar. Die Klappsitzanordnung ist entsprechend ausgebildet. Sie könnte eine Mitnehmereinheit aufweisen, die derart ausgebildet und angeordnet ist, dass beim Ausklappen der klappbaren Ablageflügel aus der eingeklappten Stellung in die ausgeklappte Stellung von der Mitnehmereinheit eine Kraft auf die klappbare Sitzfläche aufgebracht wird, so dass die klappbare Sitzfläche aus der eingeklappten Stellung in die ausgeklappte Stellung klappt. Die Kraft wirkt auf die Sitzfläche derart ein, dass diese aus der eingeklappten Stellung in die ausgeklappte Stellung geklappt wird. Die zumindest notwendige Initialkraft zum Ausklappen der Ablageflügel sowie der Sitzfläche wird zunächst von Außen, insbesondere durch eine Person aufgebracht. Die Mitnehmereinheit kann dabei als mechanisches Getriebe ausgebildet sein.

In der oben beschriebenen Variante, wo der Steg, fungiert der Steg als Mitnehmereinheit. Er greift beim Ausklappen der Ablageflügel auf die Unterseite der eingeklappten Sitzfläche im hinteren Bereich und bringt auf diese eine Kraft auf, die die Sitzfläche mit ausklappt.

Zur Sicherung der Sitzfläche und/oder der Ablageflügel im ausgeklappten Zustand kann ein Anschlag, beispielsweise ein Vorsprung innerhalb des simsartigen Wandvorsprungs, vorgesehen sein, an welchem insbesondere der hintere Bereich der Sitzfläche und/oder der Ablageflügel in Anlage kommt und ein weiteres herunterklappen verhindert.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt perspektivisch eine Kofferablage und ein davon getrennter Kinderklappsitz einer Sanitärzelle eines Schienenfahrzeugs gemäß einem heutzutage gängigen Konzept in jeweils eingeklapptem Zustand,
- Fig. 2: zeigt die Kofferablage und der Kinderklappsitz aus Fig. 1 in ausgeklapptem Zustand,
- Fig. 3: zeigt perspektivisch eine erfindungsgemäße Klappsitzanordnung einer Sanitärzelle eines Schienenfahrzeugs in vollständig eingeklappter Stellung,
- Fig. 4: zeigt die Klappsitzanordnung aus Fig. 3 mit ausgeklappter Sitzfläche,
- Fig. 5: zeigt die Klappsitzanordnung aus Fig. 3 mit ausgeklappter Sitzfläche und ausgeklappten Ablageflügeln,
- Fig. 6: zeigt die Klappsitzanordnung aus Fig. 5 mit abgelegtem Objekt,
- Fig. 7: zeigt die Klappsitzanordnung aus Fig. 3 mit ausgeklapptem Kopfteil,
- Fig. 8: zeigt die Klappsitzanordnung aus Fig. 3 mit ausgeklappter Sitzfläche und ausgeklapptem Kopfteil,
- Fig. 9: zeigt eine Detailsicht der Klappsitzanordnung aus Fig. 3 ohne Sitzfläche und eingeklappten Ablageflügeln,
- Fig. 10: zeigt die Klappsitzanordnung aus Fig. 9 mit ausgeklappten Ablageflügeln,
- Fig. 11: zeigt eine Detailsicht der Klappsitzanordnung aus Fig. 3 mit ausgeklappter Sitzfläche und eingeklappten Ablageflügeln von der Einbauseite.

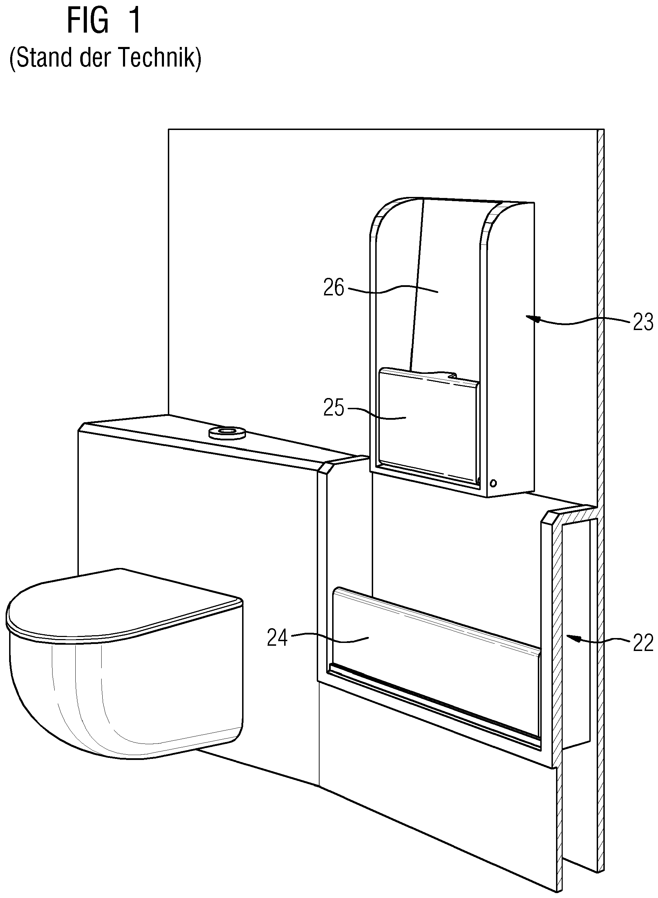

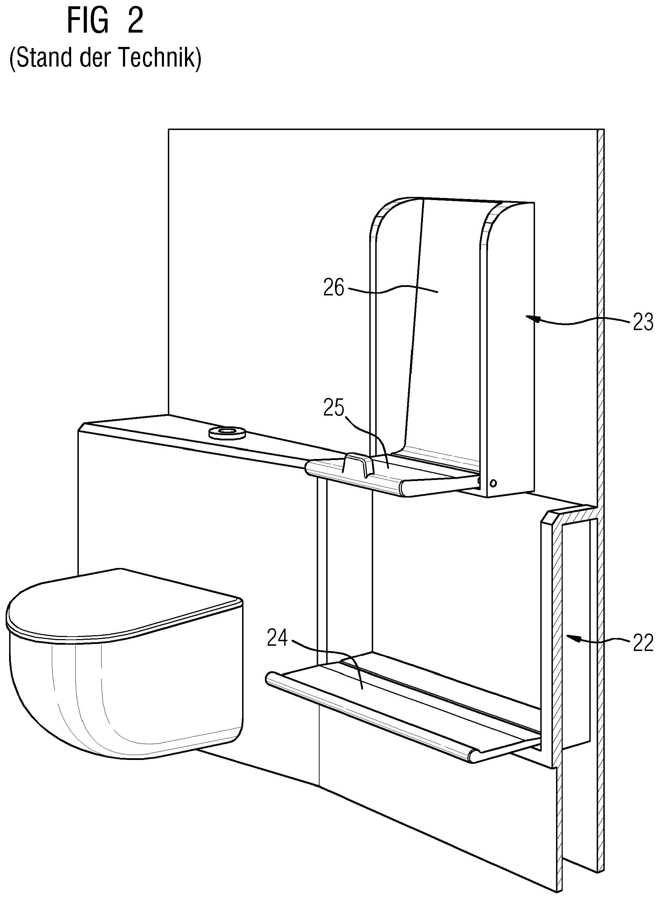

In den Figuren 1 und 2 ist eine Sanitärzelle eines Schienenfahrzeugs des Personenverkehrs umfassend eine Kofferablage 22 und ein Kinderklappsitz 23 des Stands der Technik schematisch dargestellt. Fig. 1 zeigt dabei die Kofferablage 22 und den Kinderklappsitz 23 in eingeklappten Zuständen. In Fig. 2 sind sowohl die Kofferablage 22 als auch der Kinderklappsitz 23 zur Benutzung ausgeklappt. Der Kinderklappsitz 22 weist eine feststehende, mit der Wand verbundene Rückenlehne 26 sowie eine daran klappbar angeordnete Sitzfläche 25 auf. Die Kofferablage 22 weist einen nach unten aufklappbaren Ablageflügel 24 auf. Kofferablage 22 und Kinderklappsitz 23 sind übereinander angeordnet und nehmen entsprechend viel Bauraum ein.

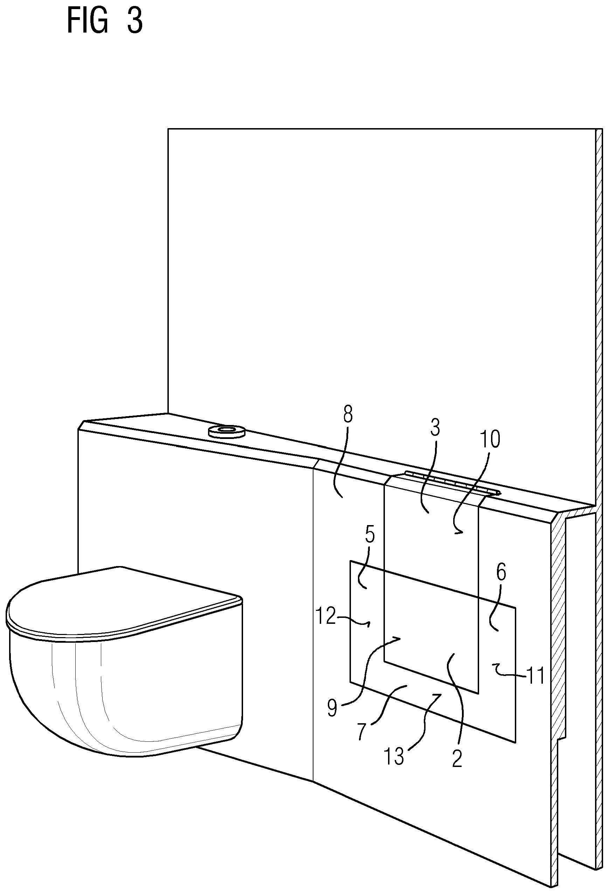

Die Figuren 3 bis 11 hingegen veranschaulichen eine Ausführungsform der erfindungsgemäßen Klappsitzanordnung 1 schematisch aus verschiedenen Perspektiven oder in verschiedenen Zuständen bzw. Stellungen ihrer Komponenten. Auch die erfindungsgemäße Klappsitzanordnung 1 ist hier in einer Sanitärzelle eines Schienenfahrzeugs des Personenverkehrs angeordnet.

Die Klappsitzanordnung 1 umfasst eine klappbare Sitzfläche 2, die im ausgeklappten Zustand eine nutzbare Sitzfläche generiert, daneben seitlich angeordnete, unabhängig von der Sitzfläche klappbare Ablageflügel 5 und 6, die über einen Steg 7 miteinander U-förmig verbunden sind, ein klappbares Kopfteil 3, sowie eine feststehende Rückenlehne 4. Die Klappsitzanordnung 1 ist in einen simsartgien Wandvorbau 8 so integriert, dass sie in eingeklappter Stellung aller klappbaren Komponenten vollständig im Wandvorbau 8 versenkt und bündig mit diesem nach außen, also hier zum Innenraum der Sanitärzelle hin, abschließt.

Fig. 3 skizziert diesen Zustand. Die Unterseiten 9, 11 und 12 und 13 der klappbaren Sitzfläche 2 und der klappbaren Ablageflügel 5 und 6 und des Stegs 7, sowie die Rückseite 10 des Kopfteils 3 liegen in einer Ebene mit der Außenhaut des umgebenden Wandvorbaus 8. Die Sitzfläche 2 ist in einer eingeklappten Stellung seitlich von den klappbaren Ablageflügeln 5 und 6 eingefasst.

Die in jeweils eingeklappter Stellung bündig miteinander verlaufenden Unterseiten 9, 11, 12 und 13 der genannten Komponenten sowie die Außenhaut des Wandvorbaus 8 bilden, abgesehen von Fugen zwischen den Komponenten und dem Wandvorbau 8, eine näherungsweise optisch einheitliche und plane Oberfläche und sind somit optisch in den Wandvorbau 8 integriert.

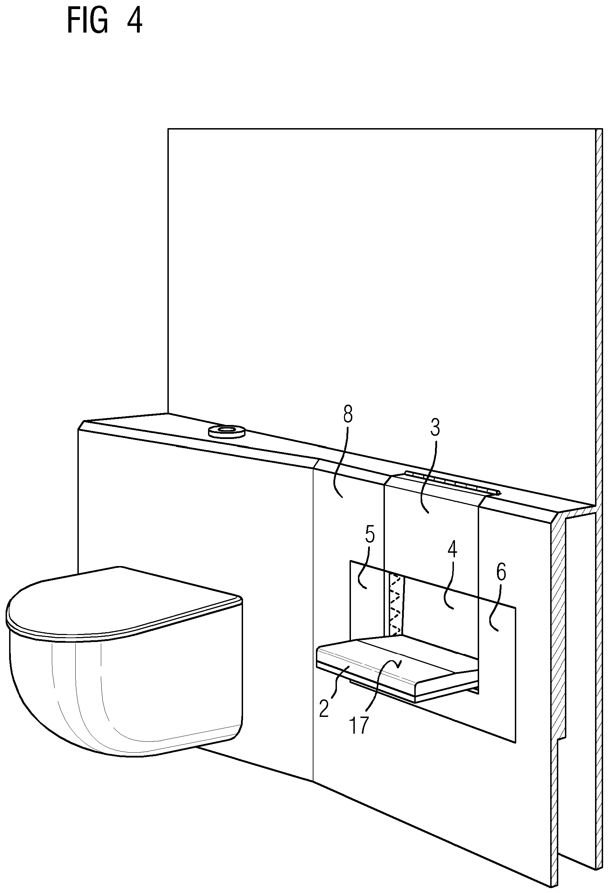

Die Sitzfläche 2 lässt sich, wie in Fig. 4 dargestellt, unabhängig von den klappbaren Ablageflügeln 5 und 6 oder des Kopfteils 3 ausklappen. Die aufgeklappte Sitzfläche 2 gibt einen Abschnitt der Rückenlehne 4 frei.

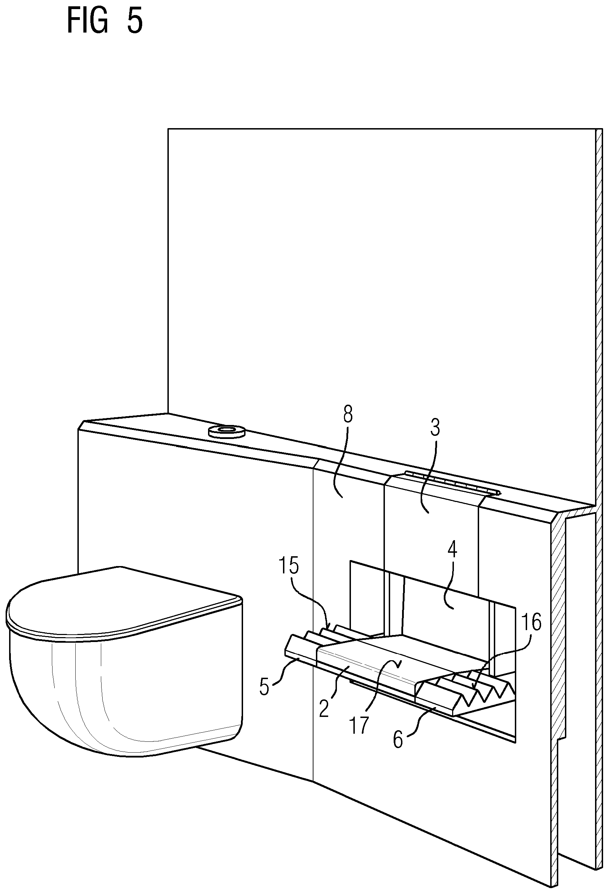

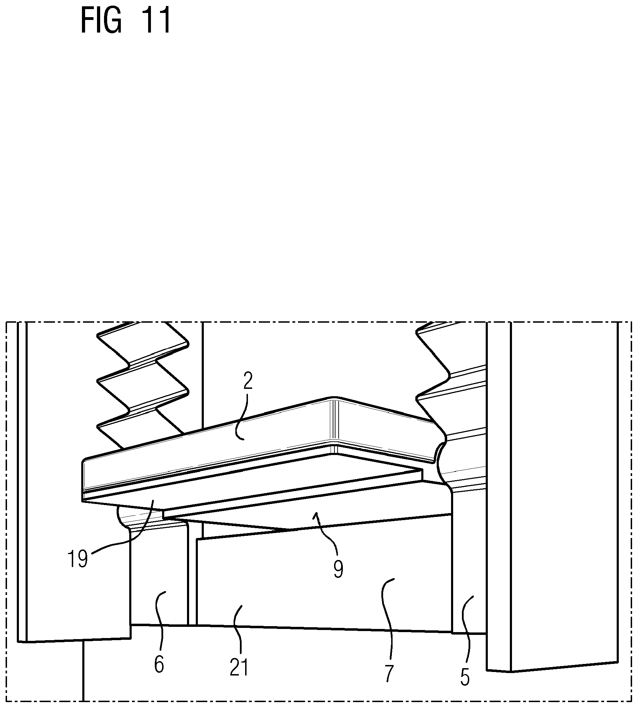

Die Ablageflügeln 5 und 6 dienen zur Ablage von größeren Objekten, beispielsweise Koffern, und lassen sich nicht unabhängig voneinander aus der eingeklappten Stellung in die ausgeklappte Stellung gemäß Fig. 5 verbringen, da sie hier über den Steg 7 fest miteinander verbunden sind. Befindet sich die Sitzfläche 2 bereits in der ausgeklappten Stellung, lassen sich die Ablageflügeln 5 und 6 anschließend noch ausklappen. Es kann jedoch eine Mitnehmereinheit vorgesehen sein, die beim Ausklappen der Ablageflügel 5 und 6 ein Ausklappen der noch eingeklappten Sitzfläche 2 bedingt. Auch für das gemeinsame Einklappen kann eine Mitnehmereinheit vorgesehen sein. Beim Aus- bzw. Einklappen der Ablageflügel 5 und 6 würde die entsprechend ebenfalls ein- oder ausgeklappte Sitzfläche 2 mitgenommen, nicht jedoch umgekehrt. Die Mitnehmereinheit ist insbesondere als geeignete Mechanik ausgebildet. In Fig. 11 ist eine Variante einer Mitnehmereinheit dargestellt.

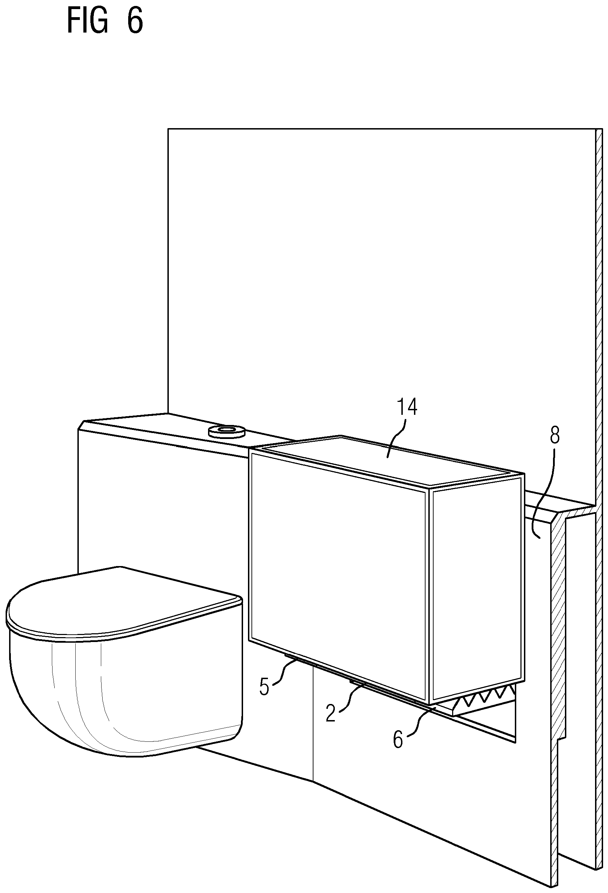

Auf die im Zustand gemäß Fig. 5 gezeigte Klappsitzanordnung 1 kann nun ein Objekt 14 wie z.B. ein Koffer abgelegt werden. Dies ist in Fig. 6 veranschaulicht. Dazu spannen die jeweiligen Oberseiten 15 und 16 der Ablageflügel 5 und 6 in einer aufgeklappten Stellung der Ablageflügel 5 und 6 sowie eine Oberseite 17 der Sitzfläche 2 in ebenfalls ausgeklappter Stellung eine gemeinsame Ebene zur Ablage eines Koffers auf. Die Ablageflügel 5 und 6 vergrößern somit die Ebene der Sitzfläche 2. Hier weisen die Oberseiten 15 und 16 der Ablageflügel 5 und 6 jeweils eine Sägezahnförmige Oberfläche auf, so dass hier lediglich die Spitzen der Oberseiten 15 und 16 der Ablageflügel 5 und 6 mit der Oberseite 17 der Sitzfläche 2 in einer gemeinsamen Ebene liegen.

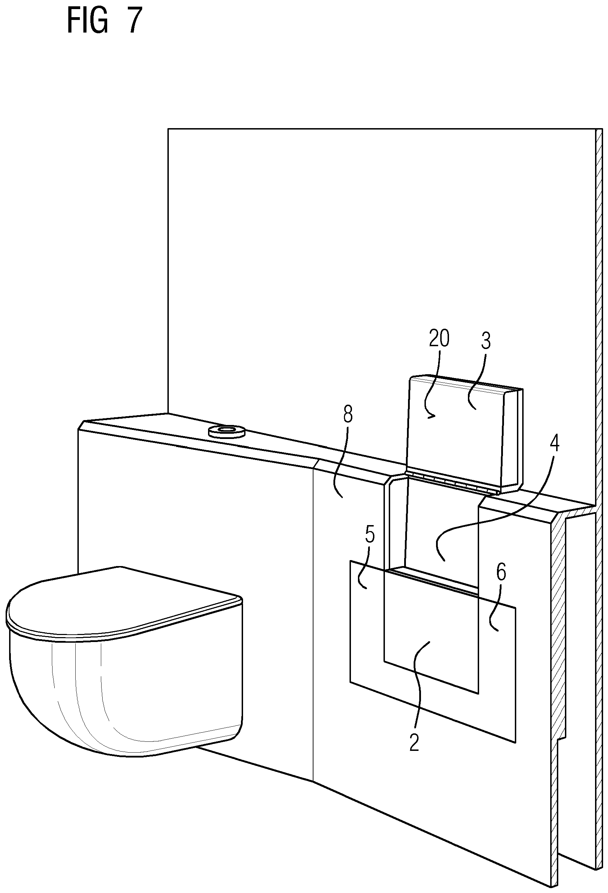

Fig. 7 zeigt ein unabhängig ausgeklapptes, gepolstertes Kopfteil 3.

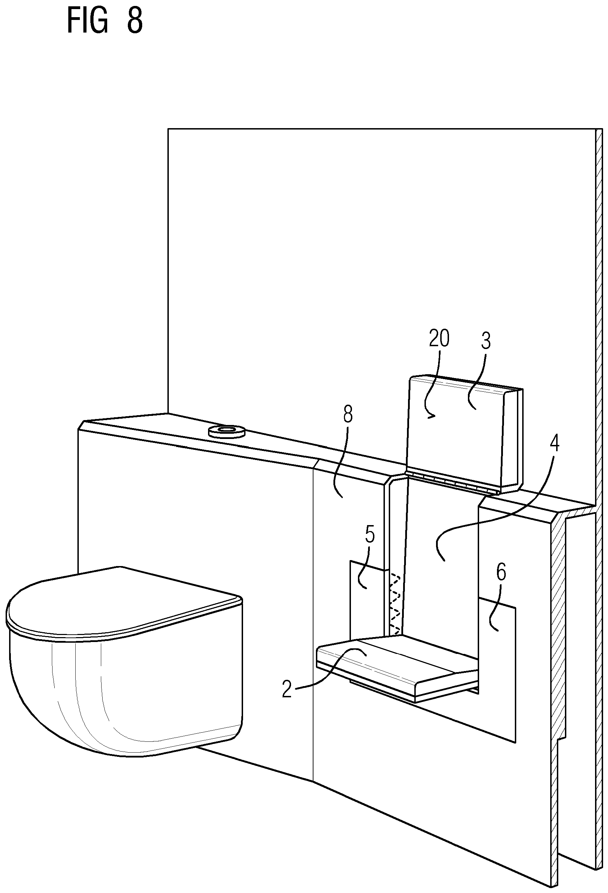

Die Klappsitzanordnung 1 gemäß dem Zustand der Fig. 8 ist nun für den bestimmungsgemäßen Gebrauch als Personensitz, insbesondere als Kindersitz, konfiguriert. Sitzfläche 2 und Kopfteil 3 befinden sich jeweils in ausgeklappter Stellung, die seitlichen Ablageflügel 5 und 6 sind hingegen eingeklappt. Sie können der auf der Klappsitzanordnung 1 sitzenden Person als Seitenführung dienen. Sie wirken als Seitenwangen und gewährleisten komfortablen Seitenhalt.

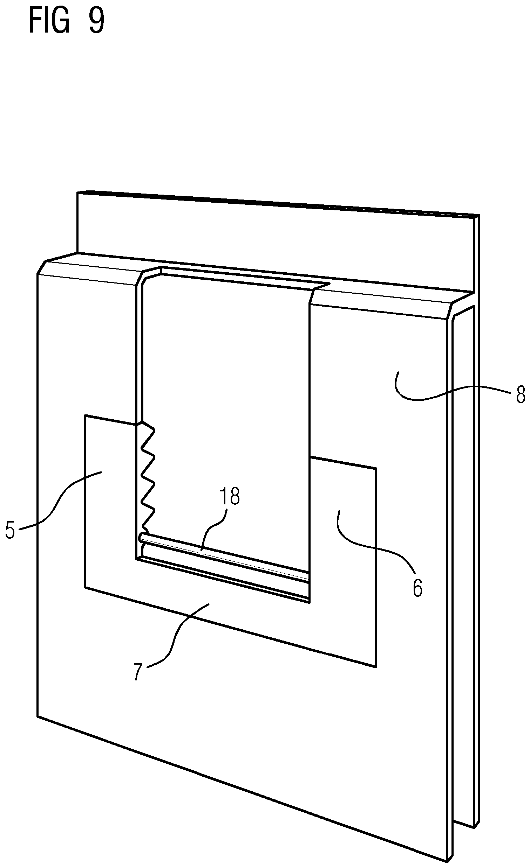

In Fig. 9 ist die Achse 18 zu sehen, um welche sowohl die Sitzfläche 2 als auch die Ablageflügel 5 und 6 klappbar gelagert sind. Sitzfläche 2 und Ablageflügeln 5 und 6 sind in diesem Ausgestaltungsbeispiel auf derselben Achse klappbar angeordnet.

Die gemeinsame Drehachse von Sitzfläche 2 und benachbarten Ablageflügeln 5 und 6 ist an beiden Bauteilen so angeordnet, dass bei einem Klappvorgang der kürzere Abschnitt des jeweiligen Bauteils innerhalb des simsartigen Wandvorbaus 8 geschwenkt wird und damit von diesem verdeckt bleibt, während der längere vordere Abschnitt aus dem simsartigen Wandvorbau 8 nach vorne heraus schwenkt und für einen Fahrgast nutzbar wird. Die gemeinsame Drehachse von Sitzfläche 2 und benachbarten Ablageflügeln 5 und 6 teilt diese jeweils in einen kürzeren und einen längeren Abschnitt. Bei einem Klappvorgang schwenkt der kürzere Teil nicht sichtbar, da vom simsartigen Wandvorbau 8 verdeckt, nach hinten, während der längere Abschnitt nach vorne heraus schwenkt und damit für den Fahrgast nutzbar wird.

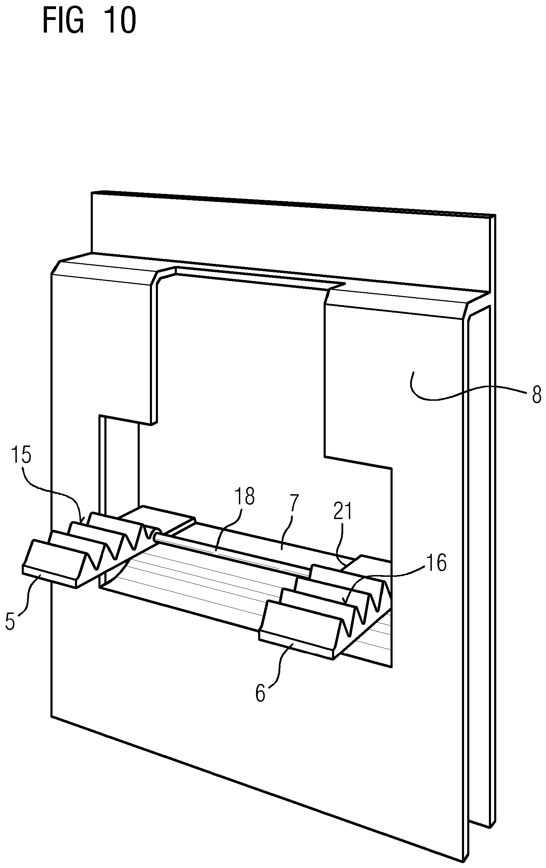

Der gemäß dieser Ansicht oberhalb der Achse angeordnete, vordere Teil der Sitzfläche 2 und der Ablageflügel 5 und 6 wird beim Ausklappen nach vorne unten geschwenkt, während der jeweils unterhalb der Achse 18 angeordnete, hintere Teil nach hinten oben geschwenkt wird. Hier liegt der Steg 7 vollständig unterhalb der Achse 18 und gehört somit zum hinteren Teil der Ablageflügel 5 und 6 welche nach hinten oben in den Wandvorbau hinein geschwenkt und dort in ausgeklappter Stellung vollständig versenkt und damit seitlich von diesem umgeben sind. Fig. 10 veranschaulicht diesen Zustand.

Fig. 11 zeigt nun eine Vertiefung oder Einsenkung 19 auf der Unterseite 9 der Sitzfläche 2 in einem hinteren Bereich. Die Einsenkung 19 entspricht hinsichtlich ihrer Tiefe der Dicke des Steges 8 zur Verbindung der beiden benachbarten Ablageflügel 5 und 6. In eingeklappter Stellung von Sitzfläche und seitlichen Flügeln liegt der vorgenannte Steg 8 komplementär in dieser Einsenkung 19. So kann die Einsenkung 19 in beiderseits eingeklappter Stellung den Steg 8 aufnehmen, so dass die Unterseiten des Stegs und der Sitzfläche bündig verlaufen. Hier weist der Steg 8 eine etwas geringere Dicke als die Ablageflügel 5 und 6 im Bereich des Stegs 8 auf. Insofern könnte hier ebenfalls von einer Vertiefung 21 gesprochen werden.

Der Steg 8 wirkt als Mitnehmereinheit für die Sitzfläche. Die Position des Steges 8 ist so ausgelegt, dass die Sitzfläche unabhängig von den Ablageflügeln 5 und 6 ausgeklappt werden kann, während beim Ausklappen der seitlichen Ablageflügel 5 und 6 der Steg 8 als Mitnehmer in die vorgenannte Einsenkung 19 greift und die Sitzfläche zusammen mit den Ablageflügeln 5 und 6 mit in die ausgeklappte Stellung schwenkt.

## Patentansprüche

1. Klappsitzanordnung (1) mit einer zwischen einer eingeklappten Stellung und einer ausgeklappten Stellung klappbaren Sitzfläche (2), **dadurch gekennzeichnet, dass** die Sitzfläche (2) in einer eingeklappten Stellung seitlich von klappbaren Ablageflügeln (5, 6) eingefasst ist, wobei Oberseiten (15, 16) der Ablageflügel in ausgeklappter Stellung zusammen mit einer Oberseite (17) der Sitzfläche (2) in ausgeklappter Stellung eine gemeinsame Ebene zur Ablage eines Koffers aufspannen.

2. Klappsitzanordnung nach Anspruch 1, **dadurch gekennzeichnet, dass** Unterseiten (11, 12) der Ablageflügel (5, 6) in eingeklappter Stellung bündig mit einer Unterseite (9) der Sitzfläche (2) in der eingeklappten Stellung verlaufen.

3. Klappsitzanordnung nach einem der Ansprüche 1 oder 2, **dadurch gekennzeichnet, dass** sie eine feststehende Rückenlehne (4) aufweist.

4. Klappsitzanordnung nach Anspruch 3, **dadurch gekennzeichnet, dass** sie ein ausklappbares Kopfteil (3) aufweist, wobei eine Vorderseite (20) des Kopfteils (3) in einer eingeklappten Stellung zur Rücklehne (4) weist und in einer ausgeklappten Stellung die Rückenlehne (4) verlängert.

5. Klappsitzanordnung nach einem der Ansprüche 1 bis 4, **dadurch gekennzeichnet, dass** die klappbaren Ablageflügel (5, 6) miteinander fest verbunden sind, so dass sie gemeinsam umklappbar sind.

6. Klappsitzanordnung nach Anspruch 5, **dadurch gekennzeichnet, dass** die klappbaren Ablageflügel (5, 6) jeweils im Bereich eines Endes über einen Steg (7) verbunden sind, welcher Steg (7) eine Unterseite (13) aufweist, die bündig mit den Unterseiten (11, 12) der Ablageflügel (5, 6) verläuft.

7. Klappsitzanordnung nach einem der Ansprüche 1 bis 6, **dadurch gekennzeichnet, dass** die klappbare Sitzfläche (2) unabhängig von den klappbaren Ablageflügeln (5, 6) von der eingeklappten Stellung in die ausgeklappte Stellung klappbar ist, wobei die Klappsitzanordnung (1) eine Mitnehmereinheit aufweist, die derart ausgebildet und angeordnet ist, dass beim Ausklappen der klappbaren Ablageflügel (5, 6) aus der eingeklappten Stellung in die ausgeklappte Stellung von der Mitnehmereinheit eine Kraft auf die klappbare Sitzfläche (2) derart aufgebracht wird, dass die klappbare Sitzfläche (2) aus der eingeklappten Stellung in die ausgeklappte Stellung klappt.

8. Klappsitzanordnung nach einem der Ansprüche 1 bis 7, **dadurch gekennzeichnet, dass** die klappbaren Ablageflügel (5, 6) und die klappbare Sitzfläche (2) um dieselbe Achse (18) klappbar angeordnet sind.

9. Klappsitzanordnung nach einem der Ansprüche 1 bis 8, **dadurch gekennzeichnet, dass** die klappbare Sitzfläche (2) zur Achse (18), um welche die klappbare Sitzfläche (2) klappbar ist, derart angeordnet ist, dass ein hinterer Teil der Sitzfläche in ausgeklappter Stellung zwischen den Ablageflügeln (5, 6) in eingeklappter Stellung angeordnet ist.

10. Klappsitzanordnung nach den Ansprüchen 6 und 9, **dadurch gekennzeichnet, dass** die klappbare Sitzfläche (2) auf ihrer Unterseite (9) eine Einsenkung (19) aufweist die einer Dicke des Stegs (8) entspricht, wobei die Vertiefung in eingeklappter Stellung der klappbaren Sitzfläche (2) und der klappbaren Ablageflügel (5, 6), in einem Bereich der Sitzfläche (2) angeordnet ist, welche mit Blick auf die Unterseite (9) der Sitzfläche (2) in horizontaler Richtung hinter dem Steg (8) liegt, so dass die Einsenkung (19) in eingeklappter Stellung der klappbaren Sitzfläche (2) und der klappbaren Ablageflügel (5, 6) den Steg (8) aufnimmt und die Unterseiten (9, 13) des Stegs (8) und der Sitzfläche (2) bündig verlaufen.

11. Klappsitzanordnung nach einem der Ansprüche 1 bis 10, **dadurch gekennzeichnet, dass** es wenigstens ein Wandpaneel oder einen simsartigen Wandvorbau (8) umfasst.

12. Klappsitzanordnung nach Anspruch 11, **dadurch gekennzeichnet, dass** die Klappsitzanordnung (1) so in das Wandpaneel oder den simsartigen Wandvorbau (8) integriert ist, dass alle klappbaren Komponenten in eingeklappter Stellung bündig mit einer die Klappsitzanordnung (1) umgebenden Front des Wandpaneels oder des Wandvorbaus (8) verlaufen.

13. Fahrzeug des öffentlichen Personenverkehrs, insbesondere Schienenfahrzeug, umfassend wenigstens eine Klappsitzanordnung (1) nach einem der Ansprüche 1 bis 12.

14. Fahrzeug nach Anspruch 13, **dadurch gekennzeichnet, dass** es wenigstens eine Sanitärzelle umfasst, in welchem die Klappsitzanordnung (1) angeordnet ist.

15. Fahrzeug nach Anspruch 14 mit einer Klappsitzanordnung nach Anspruch 11 oder 12, **dadurch gekennzeichnet, dass** das Fahrzeug einen Spülkasten aufweist, welcher vom Wandpaneel oder dem Wandvorbau (8) verdeckt ist oder welcher in das Wandpaneel oder den Wandvorbau (8) integriert ist.

## Claims

1. Folding-seat arrangement (1) having a seat surface (2) which can be swung between a swung-in position and a swung-out position, **characterized in that** the seat surface (2), in a swung-in position, is surrounded laterally by swinging-action set-down wings (5, 6), wherein upper sides (15, 16) of the set-down wings in the swung-out position together with an upper side (17) of the seat surface (2) in the swung-out position define a common plane on which to set down a suitcase.

2. Folding-seat arrangement according to Claim 1, **characterized in that** undersides (11, 12) of the set-down wings (5, 6) in the swung-in position run flush with an underside (9) of the seat surface (2) in the swung-in position.

3. Folding-seat arrangement according to either of Claims 1 and 2, **characterized in that** it has a fixed backrest (4).

4. Folding-seat arrangement according to Claim 3, **characterized in that** it has a swing-out head part (3), wherein a front side (20) of the head part (3), in a swung-in position, is oriented towards the backrest (4) and, in a swung-out position, extend the backrest (4).

5. Folding-seat arrangement according to one of Claims 1 to 4, **characterized in that** the swing-action set-down wings (5, 6) are fixed to one another, in which case they can be swung round together.

6. Folding-seat arrangement according to Claim 5, **characterized in that** the swing-action set-down wings (5, 6) are each connected in the region of one end via a crosspiece (7), which crosspiece (7) has an underside (13) which runs flush with the undersides (11, 12) of the set-down wings (5, 6) .

7. Folding-seat arrangement according to one of Claims 1 to 6, **characterized in that** the swing-action seat surface (2) can be swung from the swung-in position into the swung-out position independently of the swing action set-down wings (5, 6), wherein the folding-seat arrangement (1) has a driver unit, which is designed and arranged such that, when the swing-action set-down wings (5, 6) are being swung out from the swung-in position into the swung-out position, the driver unit subjects the swing-action seat surface (2) to such a force that the swing-action seat surface (2) swings from the swung-in position into the swung-out position.

8. Folding-seat arrangement according to one of Claims 1 to 7, **characterized in that** the swing-action set-down wrings (5, 6) and the swing-action seat surface (2) are arranged such that they can be swung around the same spindle (18).

9. Folding-seat arrangement according to one of Claims 1 to 8, **characterized in that**, in relation to the spindle (18) around which the swing-action seat surface (2) can be swung, the swing-action seat surface (2) is arranged such that a rear part of the seat surface in the swung-out position is arranged between the set-down wings (5, 6) in the swung-in position.

10. Folding-seat arrangement according to Claims 6 and 9, **characterized in that**, on its underside (9), the swing-action seat surface (2) has a recess (19) corresponding to a thickness of the crosspiece (8), wherein, in the swung-in position of the swing-action seat surface (2) and of the swing-action set-down wings (5, 6), the depression is arranged in a region of the seat surface (2) which, in relation to a view of the underside (9) of the seat surface (2), is located horizontally behind the crosspiece (8), and therefore, in the swung-in position of the swing-action seat surface (2) and of the swing-action set-down wings (5, 6), the recess (19) accommodates the crosspiece (8) and the undersides (9, 13) of the crosspiece (8) and of the seat surface (2) run in a flush manner.

11. Folding-seat arrangement according to one of Claims 1 to 10, **characterized in that** it comprises at least one wall panel or a ledge-like wall-front attachment (8).

12. Folding-seat arrangement according to Claim 11, **characterized in that** the folding-seat arrangement (1) is integrated in the wall panel or the ledge-like wall-front attachment (8) such that all the swing-action components, in the swung-in position, run flush with a front of the wall panel or of the wall-front attachment (8), said front enclosing the folding-seat arrangement (1).

13. Public-transport vehicle, in particular rail vehicle, comprising at least one folding-seat arrangement (1) according to one of Claims 1 to 12.

14. Vehicle according to Claim 13, **characterized in that** it comprises at least one bathroom pod, in which the folding-seat arrangement (1) is arranged.

15. Vehicle according to Claim 14, having a folding-seat arrangement according to Claim 11 or 12, **characterized in that** the vehicle has a wash basin which is concealed by the wall panel or the wall-front attachment (8) or which is integrated in the wall panel or the wall-front attachment (8).

## Revendications

1. Strapontin (1) ayant une surface (2) de siège rabattable entre une position escamotée et une position rabattue, **caractérisé en ce que** la surface (2) de siège est, dans une position escamotée, bordée latéralement d'ailes (5, 6) de dépôt rabattables, des faces (15, 16) supérieures des ailes de dépôt formant dans la position rabattue, ensemble avec une face (17) supérieure de la surface (2) de siège en position rabattue, un plan commun de dépôt d'un bagage.

2. Strapontin suivant la revendication 1, **caractérisé en ce que** des faces (11, 12) inférieures des ailes (5, 6) de dépôt sont, dans l'état escamoté, à affleurement avec une face (9) inférieure de la surface (2) de siège dans l'état escamoté.

3. Strapontin suivant l'une des revendications 1 ou 2, **caractérisé en ce qu'**il a un dossier (4) fixe.

4. Strapontin suivant la revendication 3, **caractérisé en ce qu'**il a une partie (3) de tête rabattable, une face (20) avant de la partie (3) de tête étant, dans une position escamotée, tournée vers le dossier (4) et, dans un état rabattu, prolongeant le dossier (4).

5. Strapontin suivant l'une des revendications 1 à 4, **caractérisé en ce que** les ailes (5, 6) de dépôt rabattables sont reliées fixement entre elles de manière à pouvoir être rabattues ensemble.

6. Strapontin suivant la revendication 5, **caractérisé en ce que** les ailes (5, 6) de dépôt rabattables sont reliées chacune dans la partie d'une extrémité par une entretoise (7), laquelle entretoise (7) a une face (13) inférieure qui s'étend à affleurement avec les faces (11, 12) inférieures des ailes (5, 6) de dépôt.

7. Strapontin suivant l'une des revendications 1 à 6, **caractérisé en ce que** la surface (2) de siège rabattable peut indépendamment des ailes (5, 6) de dépôt rabattables, être rabattue de la position escamotée à la position rabattue, le strapontin (1) ayant une unité d'entraineur, qui est constituée et disposée de manière à ce que, lorsque les ailes (5, 6) de dépôt rabattables sont rabattues de la position escamotée à la position rabattue par l'unité d'entraineur, une force est appliquée à la surface (2) de siège rabattable de manière à ce que la surface (2) de siège rabattable se rabatte de la position escamotée à la position rabattue.

8. Strapontin suivant l'une des revendications 1 à 7, **caractérisé en ce que** les ailes (5, 6) de dépôt rabattables et la surface (2) de siège rabattable sont montées rabattables autour du même axe (18).

9. Strapontin suivant l'une des revendications 1 à 8, **caractérisé en ce que** la surface (2) de siège rabattable est montée par rapport à l'axe (18) autour duquel la surface (2) de siège rabattable peut être rabattue de manière à ce qu'une partie arrière de la surface de siège soit, dans la position rabattue, disposée entre les ailes (5, 6) de siège dans la position escamotée.

10. Strapontin suivant les revendications 6 et 9, **caractérisé en ce que** la surface (2) de siège rabattable a, sur sa face (9) inférieure, un creux (19) qui correspond à une épaisseur de l'entretoise (8), la cavité étant, dans la position escamotée de la surface (2) de siège rabattable et des ailes (5, 6) de dépôt rabattables, disposée dans une partie de la surface (2) de siège qui, en regardant la face (9) inférieure de la surface (2) de siège, est dans une direction horizontale derrière l'entretoise (8) de manière à ce que le creux (19), en la position escamotée de la surface (2) de siège rabattable et des ailes (5, 6) de dépôt rabattables, reçoive l'entretoise (8) et de manière à ce que les faces (9, 13) inférieures de l'entretoise (8) soient à affleurement avec la surface (2) de siège.

11. Strapontin suivant l'une des revendication 1 à 10, **caractérisé en ce qu'**il comprend au moins un panneau mural ou un devant (8) mural de type en rebord.

12. Strapontin suivant la revendication 11, **caractérisé en ce que** le strapontin (1) est intégré au panneau mural ou au devant (8) mural de type en rebord de manière à ce que tous les éléments rabattables soient en la position escamotée à affleurement avec un avant, entourant le strapontin (1), du panneau mural ou de l'avant (8) mural.

13. Véhicule du transport public de passagers, notamment véhicule ferroviaire, comprenant au moins un strapontin (1) suivant l'une des revendications 1 à 12.

14. Véhicule suivant la revendication 13, **caractérisé en ce qu'**il comprend au moins un bloc sanitaire, dans lequel le strapontin (1) est monté.

15. Véhicule suivant la revendication 14, comprenant un strapontin suivant la revendication 11 ou 12, **caractérisé en ce que** le véhicule a un réservoir de chasse, qui est recouvert du panneau mural ou du devant (8) mural ou qui est intégré au panneau mural ou au devant (8) mural.
